# EUROPEAN PATENT APPLICATION

(11) **EP 1 993 018 A2**
(43) Date of publication of application: **19.11.2008**
(21) Application number: 06851976.8
(22) Date of filing: 25.08.2006
(51) Int. Cl.: G05D 16/06

(54) **PRESSURE REGULATOR**

(30) Priority: 25.08.2005 JP 2005243659
(71) Applicant: Scripto-Tokai, Inc., Ontario, CA 91716 (US); Tokai Corporation, Tokyo 151-0073 (JP)
(72) Inventor: NAKAMURA, Yasuaki, Shizuoka 410-1431 (JP); USUI, Hideto, Shizuoka 410-1431 (JP)
(74) Representative: Viering, Jentschura & Partner
(86) International application number: PCT/IB2006/004326
(87) International publication number: WO 2008/102193

(57) **Abstract**

[Problem] Reducing the dimensions and extending the service life of a pressure regulator intended for decrease of fluid pressure even when the pressure regulator operates with fluids such as high-pressure gas with corrosive properties.

[Means for the Solution of the Problem]
A pressure regulator comprising: a housing 2 having an inlet opening 21 for the supply of pressurized fluid under primary pressure from a pressurized fluid source and an outlet opening 22 for discharging the pressurized fluid under a secondary reduced pressure, and a channel between the aforementioned inlet opening 21 and outlet opening 22; and a pressure-regulating mechanism for reducing the aforementioned primary pressure to the aforementioned secondary pressure; the pressure regulator being **characterized by** the fact that the pressure-regulating mechanism has a moveable body 7 that comprises a diaphragm 8 which is displaceable in response to pressure fluctuations, the inlet opening 21 and the moveable body 7 being in line with each other in the direction substantially perpendicular to the direction of the diaphragm displacement.

## Description

### [Field of the Invention]

The present invention relates to a pressure regulator for reducing pressure of a pressurized fluid such as gas, liquid, or the like, from a primary pressure to a secondary pressure through a pressure regulating mechanism.

### [Background of the Invention]

Known in the art are pressure regulators, which are used as devices for reducing pressure of fluids, such as liquids, gases, etc., stored under pressure in fluid-supply sources, to a predetermined level and for supplying the reduced-pressure fluids to external devices.

The aforementioned known pressure regulators are used, e.g., as high-pressure gas regulators employed in liquefied gas utilization apparatuses, gas supply equipment, or similar gas-handling devices (see Patent References 1 and 2).
These apparatuses reduce high primary pressure at which the gas is supplied and provide a permanent outlet pressure (secondary pressure). A pressure regulator of the aforementioned type normally has a diaphragm displaceable in response to fluctuations of gas pressure, a pressure control chamber separated by the diaphragm [into two parts], and a pressure control valve located in the aforementioned pressure control chamber and connected to the diaphragm so that the inflow of gas is controlled by opening or closing the valve seat in the gas supply channel.
Another pressure regulator for fluids is one known as a water-pressure governor (Non-Patent Reference 1). This governor has a construction essentially similar to the gas-pressure regulator.

On the other hand, subjects of recent investigation and miniaturization are pressure regulators for supply of fuel from stable-pressure fuel supply sources used in connection with notebook computers, personal data-assistants, or similar small electronic devices, especially portable telephones that incorporate power sources in the form of fuel cells.
[Patent Reference 1] Unexamined Patent Application Publication [hereinafter referred to as "Kokai"] 2004-318683
[Patent Reference 2] Kokai 2004-334755
[Non-Patent Reference 1] Toshi Gasu Kogyo [City Gas Industry], Utensil Compilation, Japan Gas Association, S56.5.10, p. 236

### [Disclosure of the Invention]

### [Problems to be Solved by the Present Invention]

However, in a pressure regulator of the type described, e.g., in Patent Reference 2, the connection opening (the inlet opening) of the gas inlet unit which is to be connected to the fluid-supply source has its central axis oriented in the diaphragm-displacement direction. This increases the size of the pressure regulator in the displacement direction and makes it difficult to incorporate this regulator into a flat device such as a portable telephone.

The pressure regulators disclosed in the aforementioned Non-Patent Reference 1 and in Patent Reference 1 have gas or liquid inlet openings (i.e., the openings for connection to the fluid supply source) which are arranged perpendicular to the direction of diaphragm displacement. However, since the diaphragm and the fluid inlet opening are located in separate positions in the aforementioned displacement direction, this, similar to the previous example, increases dimensions of the regulator in the diaphragm displacement direction and makes it difficult to incorporate this regulator into a flat device such as a portable telephone.

Based on the above information, it is an object of the present invention to provide pressure regulator that has small dimensions and a flat shape.

### [Means for the Solution of the Problem]

A pressure regulator of the invention comprises: a housing having an inlet opening for the supply of a pressurized fluid under a primary pressure and an outlet opening for discharging the pressurized fluid under a secondary reduced pressure, and a channel between the aforementioned inlet opening and outlet opening, the fluid being supplied from a fluid-supply source; and a pressure regulating mechanism for reducing the aforementioned primary pressure to the aforementioned secondary pressure; the pressure regulator being characterized by the fact that the pressure regulating mechanism has a moveable body that comprise a diaphragm which is displaceable in response to pressure fluctuations, the inlet opening an the moveable body being in line with each other and oriented in the direction substantially perpendicular to the direction of the diaphragm displacement.

The housing of the aforementioned pressure regulator comprises:
a main casing the interior of which contains the aforementioned moveable body with the diaphragm, the outer peripheral portion of the diaphragm being sandwiched from one side [of the housing] and from a second side [of the housing] that is opposite to the first side, and a pressure-control chamber that contains the aforementioned channel on said first side;
a cover casing that is located on said second side and contains an atmospheric-pressure chamber connected with the atmosphere; and
a cylindrical connector that contains the aforementioned inlet opening, is connected to the main casing, and has its central axis oriented substantially perpendicular to the diaphragm displacement direction.

The aforementioned main pressure-control chamber used in the pressure regulator of the invention is provided with a partition that divides this chamber into a primary-pressure chamber connected to the inlet opening and a secondary-pressure chamber that is connected to the outlet opening;
the aforementioned partition being arranged substantially perpendicular to the diaphragm displacement direction and being provided with a communication opening for connecting the primary-pressure chamber with the secondary-pressure chamber; the moveable body consisting of two parts between which the diaphragm is sandwiched, both parts moving together with the diaphragm, one of this parts being located on the main-casing side of the diaphragm and another on the cover-casing side of the diaphragm;
among the aforementioned two parts, the one which is located on the main-casing side projecting outside the main casing and being provided with an axial extension through which said communication opening passes;
an annular groove being formed in the periphery on the tip of the axial extension, and a pressure-control valve that opens and closes the aforementioned communication opening being placed into the aforementioned annular groove.

### [Effects of the Invention]

Since in the pressure regulator of the invention, the pressure regulation mechanism has a moveable body that contains a diaphragm displaceable in response to fluctuation of fluid pressure and since the inlet opening and the moveable body are lined with each other in the direction perpendicular to the displacement direction of the diaphragm, it is not necessary to arrange the input opening in the same direction as the displacement of the diaphragm. Therefore, the pressure regulator can be flattened in the aforementioned displacement direction.

### [Description of Preferred Embodiment]

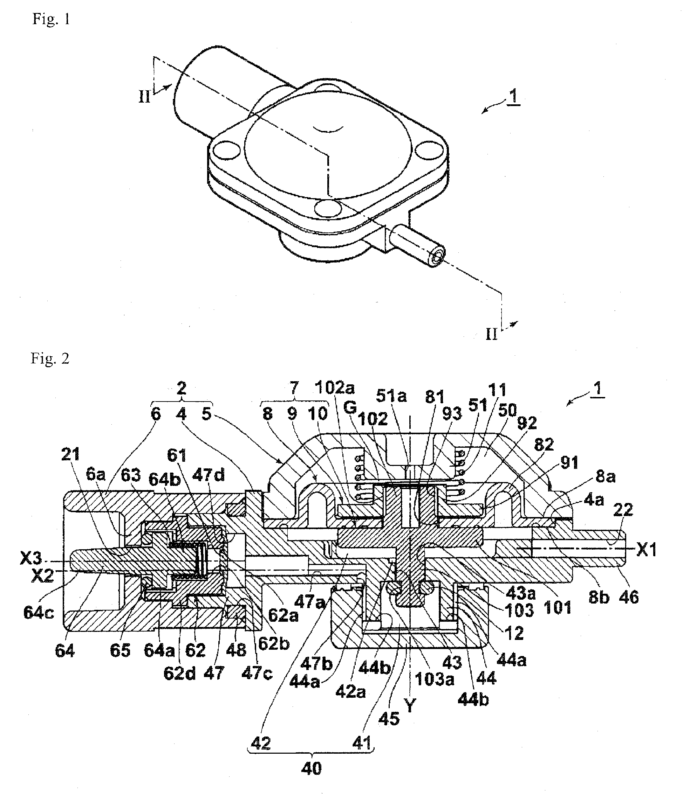

A pressure regulator of the present invention will be further explained in more details with reference to one practical embodiment. Fig. 1 is a three-dimensional view of a pressure regulator according to one embodiment of the invention, and Fig. 2 is a sectional view along line II-II of Fig. 1. For convenience of the description of the illustrated embodiment, the part of the device shown on the side of the cover case will be referred to as the upper part, and the side of the main case will be referred to as the lower part.

In general, the pressure regulator 1 comprises a housing 2 that contains the following components: a fluid inlet opening 21 for receiving a pressured fluid under primary pressure from a fluid-supply source (not shown in the drawings) such as, e.g., a fuel container for a fuel cell; an outlet opening 22 for discharging the pressurized fluid under a secondary pressure which is lower than the primary pressure; a channel 23 that extends from the inlet opening 21 to the outlet opening 22; and a pressure regulating mechanism 3 for reducing the pressure from primary to secondary installed in the aforementioned channel 23 [REFERENCE NUMERALS 23 AND 3, WHICH DESIGNATE MAJOR COMPONENTS, ARE ABSENT IN THE DRAWINGS - TR. NOTE].

The housing 2 consists of a main casing 4 having an inner space (that forms the aforementioned channel 23), a cover casing 5, and a cylindrical connector 6 attached in the transverse direction to the side of the main casing 4. The main casing 4 and cover casing 5 are attached to each other, e.g. by screws (not shown - translator's note) and are in contact with the upper surface 8b and the lower surface 8a, respectively, of the peripheral portion of a diaphragm 8 (that is described below) which is sandwiched between the aforementioned cover casing 5 and the main casing 4. [IN FIG. 2 PPOSITIONS OF REFERENCE NUMERALS 8a AND 8b HAVE TO BE REVERSED -- TR. NOTE]. Furthermore, respective spaces are formed between the cover casing 5 and the diaphragm 8 and between the main casing 4 and the diaphragm 8, of which the space 50 on the cover-casing side is connected to the atmosphere, while the space on the main-casing side comprises a pressure control chamber 40 that contains the aforementioned channel 23.

A downward directed projection 51 (a stopper) is formed on the inner wall and in the central part of the cover casing 5. The lower end face of this projection 51 is made flat. A small-diameter opening 51 a that is formed in the tip, i.e., in the lower end face of the projection 51 connects the chamber 50 with the atmosphere so that this chamber is maintained under the atmospheric pressure.

The diaphragm 8 is placed onto the main casing 4 (which is described below), is held in place by a shoulder 4a formed on the entire periphery of the upper surface of the main casing 4, and is fixed and clamped from both sides between the aforementioned first (lower) surface 8a that faces the pressure control chamber 40 and the aforementioned second (upper) surface 8b that faces the atmospheric-pressure chamber 50. Thus, the lower surface 8a of the diaphragm is under an increased pressure of the fluid while the upper surface 8b of the diaphragm experiences the atmospheric pressure so that under the effect of the pressure difference between the fluid pressure and the atmospheric pressure the diaphragm can deflect in the vertical direction. However, the diaphragm is maintained in a balanced position since the urging force generated by the aforementioned pressure difference is counterbalanced by the resilient force of a pressure-control spring 11, which is described below.

The diaphragm 8 can be made, e.g., from rubber or a similar material that may have a flat form and possesses resiliency. The diaphragm has a round opening pierced in the center thereof and a curvilinear circular projection 82 at a certain distance from the center of the diaphragm. Furthermore, the diaphragm 8 has a support 9 (which is described later) located on the upper side, i.e., on the side of the atmospheric-pressure chamber 50), and a shaft unit 10 (which is described later) located on the lower side, i.e., on the side of the pressure-control chamber 40. Both the support 9 and the shaft unit 10 are made integrally with the diaphragm 8 and move together therewith in the vertical (axial) direction in response to resilient displacements of the diaphragm 8. Altogether, the diaphragm 8, support 9, and shaft unit 10 form a moveable body 7. The axis that passes essentially through the center of the moveable body 7 is axis Y in the direction of which the moveable body 7 moves.

The support 9 consists of a flat essentially disk-like portion 91 that is rigidly attached to the upper side of the diaphragm and extends inward from the curvilinear circular projection 92 and an essentially cylindrical projection portion 92 that projects upward from the central part of the disk-like portion 91. The circular projection 92 is located opposite to the projection 51 of the cover casing 5 and, similar to the projection 51, has a flat upper end face and a male thread 93 cut from the upper to the lower end of the projection 51. The support 9 can be preferably made from a light-weight material such as polyoxymethylene (POM) but it can also be made from metal.

A compression coil spring 11 (hereinafter referred to as "a pressure control spring") is placed onto the outer surfaces of the circular projection 92 of the support 9 and the projection 51. Normally, the pressure-control spring 11 urges the diaphragm 8 downward with a predetermined force through the support 9. Under normal operation conditions of the pressure regulator of the invention a gap G exists between the lower end face of the projection 51 and the upper end face of the projection 92 of the support 9. When the pressure of the supplied pressurized fluid becomes excessive, the axial extension 103 of the shaft unit 10 (which is described later) is urged upward, the upper end face of the support projection 92 is pressed against the lower end face of the projection 51 of the cover casing 5, and as a result, excessive deformation of the diaphragm is prevented.

The shaft unit 10 has a substantially cylindrical large-diameter portion 101, which is rigidly connected to the lower (first) surface of the diaphragm 8, and upper and lower axial extensions 102 and 103, respectively, that extend in the vertical direction from the central part of the cylindrical large-diameter portion 101. The axial extension 103 passes through an opening 43a of the main casing 4 so that its lower end projects from the aforementioned opening. An annular groove 103a is formed in the periphery of the projecting tip of the axial extension 103, and a pressure-control valve 12 for opening and closing the opening 43a is secured in the annular groove 103a. The pressure-control valve 12 may comprise a resilient seal ring. Even if the volume of the pressure-control valve 12 of this construction has increased because of swelling caused by contact with pressurized liquid such as oil, such volumetric deformation will not affect closing/opening operation of the valve or flow rate of the fluid since displacements of the press-control valve in the vertical direction will be limited by the annular groove 103a.

The axial extension 102 passes through an opening 81 of the diaphragm 8 and extends to the upper end face of the projection 92. A male thread 102a formed on the axial extension 102 is threaded into a female thread 93 formed in the support 9 so that the diaphragm appeared to be secured from both sides and is clamped between the support 9 and the shaft unit 10 for forming an integral body therewith. It is preferable to place between the support 9 and the diaphragm 8 a film made from a material with low coefficient of friction, e.g., from polyethylene terephthalate (PET). Provision of this film makes it possible to reduce deformation of the diaphragm 8 under the effect of a friction force that occurs when the diaphragm 8 is secured in place by screwing the support 9 onto the axial projection 102.

The main casing 4 also has a partition 43 that divides the pressure-control chamber 40 into a secondary pressure-control chamber 42 that faces the diaphragm 8 and a primary pressure-control chamber 41 that is located below the secondary pressure-control chamber 42.

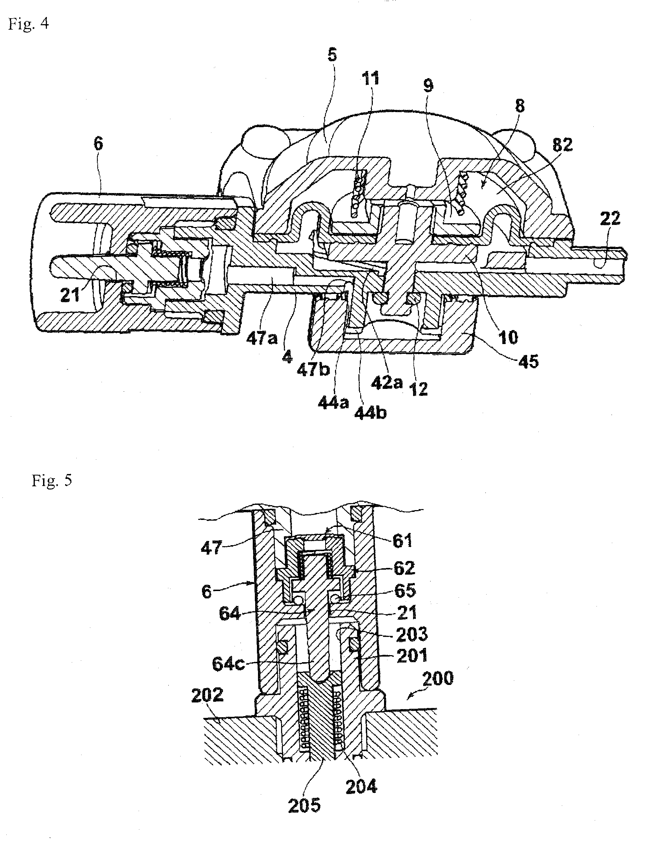

In the position corresponding to the aforementioned axial projection 103 of the shaft unit 10, the partition 43 has a through opening 43a between the primary pressure-control chamber 41 and the secondary pressure-control chamber 42. Fig. 4 is a sectional three-dimensional view of the pressure regulator 1 shown in Fig. 1. As can be seen from Fig. 4, the device has a fluid-passing groove 42a, which is formed on the side of the secondary pressure-control chamber 42 of the main casing 4. This groove extends from the through opening 43a and is also connected to the aforementioned cylindrical connector 6. Thus, if pressure in the primary pressure-control chamber 41 drops, the aforementioned moveable body 7 moves down, and the lower end face 101 of the large-diameter part 101 of the shaft unit 10 comes into contact with the surface on the side of the secondary pressure-control chamber 42 of the main casing 4, whereby it becomes possible to facilitate the flow of the pressurized liquid admitted from the primary pressure-control chamber 41.

Extended downward from the lower surface of the partition 43 is a first annular projection 44 that surrounds the tip of the aforementioned axial extension. The annular projection is surrounded from the outside by a cover member 45. In order to bring the upper surface of the cover member 45 into contact with the lower surface of the main casing 4 and the bottom wall of the cover into contact with the lower end face of the annular projection 44, the cover member 45 may be removably connected to the annular projection 44, e.g., by forming a thread in its inner wall for screwing it onto the annular projection 44. Thus, the aforementioned primary pressure-control chamber 41 is defined by the inner surface of the cover member 45 and the inner surface of the first annular projection 44.

Fluid-passing channels 44a and 44b for the supply of pressurized fluid into the primary pressure-control chamber 41 from an inlet fluid flow channel 47a through an opening 47b are formed in the outer peripheral surface and the lower end face of the first annular projection 44, respectively. In the position opposite to the point where the axial extension 103 is fixed, the fluid-passing channel 44a formed in the outer peripheral surface extends from the lower end face of the first annular projection 44 in the upward direction and further passes through the opening 47b on the side of the inlet fluid flow channel 47a and then extends to the upper end of the inlet fluid flow channel 47a. The fluid passing channel 44b formed in the lower end face extends from the channel 44a, which is formed in the outer peripheral surface, and enters the primary pressure-control chamber 41.

In the illustrated embodiment, the main casing 4 is shown as having one groove 44a and one groove 44b formed on the outer peripheral surface and on the lower end face of the first annular projection 44, respectively, on the side opposite to fixation of the axial extension 103. However, the invention is not limited to such an arrangement. For example, only the inlet fluid flow channel 47a can be used if this channel is connected to the primary pressure-control chamber 41.

When in response to displacement of the diaphragm 8 the axial extension 103 shifts upward or downward (in the direction of axis Y), the aforementioned pressure-control valve 12 (seal ring) located in the primary pressure-control chamber 41 comes into contact or is separated from the lower end face of the partition 43, whereby fluid can either flow or not flow through the gap formed between the axial extension 103 and the through-opening 43a. In this way it becomes possible to control pressure of fluid in the secondary pressure-control chamber 42. The aforementioned pressure-control mechanism 3 is formed from the pressure-control spring 11, moveable body 7, pressure-control valve 12, etc,

One end of the main casing 4 is connected to the secondary pressure-control chamber 42 which contains pressurized fluid under secondary, i.e., reduced, pressure provided by the aforementioned pressure-control mechanism 3, while the other end of the aforementioned main casing 4 can be connected, e.g., to a fuel cell (not shown in the drawing). The main casing 4 also contains a nozzle 46 with a discharge opening 22 for discharging fluid pressurized under secondary pressure from the interior of the secondary pressure-control chamber 42. The central axis X1 of the nozzle 46 is arranged substantially perpendicular to axis Y.

In the illustrated embodiment, the nozzle 46 is connected to the side of the main casing 4, but the invention is not limited to such an arrangement, and other modifications are possible for connection to a fuel cell, or the like, provided that one end of the nozzle is connected to the secondary pressure-control chamber. For example, the nozzle can project in the downward direction or can extend at an angle.

Furthermore, the main casing 4 has a second annular projection 47 that contains the aforementioned flow-inlet channel 47a which receives the primary-pressure fluid from the cylindrical connector 6, which is described later. The second annular projection 47 is an integral part of the main casing 4 and has its central axis X2 oriented in the direction substantially perpendicular to axis Y. One end of the fluid inlet channel 47a on the side of the moveable body 7 is connected to the fluid-passing channel 44a, which is formed on the outer periphery of the first annular extension 44. The fluid-passing opening 47b is formed at the lower end and inside the fluid-passing opening 47a in order to connect the aforementioned fluid-passing channel 44a with the fluid inlet opening 47a.

Furthermore, an annular groove 47c is formed on the outer periphery at the base of the second annular projection 47 to accommodate a seal ring 48 of the aforementioned cylindrical connector 6. A thread, which is not shown in the drawing, can be made on the outer peripheral surface of the second annular projection 47 for threaded connection of the cylindrical connector 6 [to an external device. -Tr. Note]

The cylindrical connector 6 is an element for connection to a fluid-supply source such as a pressurized fluid container, which is described below. The cylindrical connector 6 has a partition 6a arranged substantially in the middle of its length. The partition 6a receives the lower axle 64c of a plug 64, which is described later, and is provided with an inlet opening 21 for receiving the primary-pressure fluid from the fluid-supply source. Installed in a space between the partition 6a and the second annular extension 47 are the following components, which are listed in the direction away from the secondary annular extension 47: a filter 61, a joint 62, a compression spring 63 (hereinafter referred to as "spring 63"), and the plug 64.

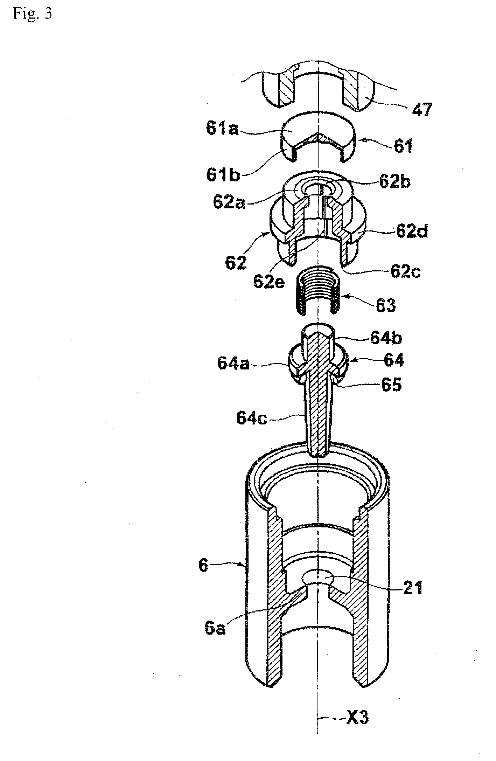

Fig. 3 is an exploded three-dimensional view of parts located on the rear side of the aforementioned secondary annular extension 47. For convenience of subsequent explanation of the cylindrical connector 6, the upper side of Fig. 3 corresponds to the right side of Fig. 2, and the lower side of Fig. 3 corresponds to the left side of Fig. 2.

The joint 62 can be molded, e.g., from polyoxymethylene, and comprises a substantially cylindrical body having an upper wall 62a. The upper wall 62a has a cylindrical opening 62b, and a flange 62d that extends radially outward is formed between the upper wall 62a and the lower end face 62c.

The filter 61 comprises a disk and a disk-like member 61 a from which a cylindrical wall 61 b extends in the downward direction. The filter 61 fits onto the upper wall 62a of the joint 62. In the assembled state of the device, the flange 62d of the joint 62 contacts the lower end face of the second annular extension 47 of the main casing 4, and the filter 61 is sandwiched between the upper wall 62a of the joint 62 and an intermediate shoulder 47d of the second annular extension 47. The upper end of the filter 61 is connected to the fluid inlet channel 47a, which communicates with the first pressure-control chamber 41. This filter protects the pressure-regulating mechanism 3 from penetration of small particles of dirt, etc., that may be contained in the primary-pressure fluid. This prevents malfunction of the working parts of the pressure-regulating mechanism. The inner peripheral surface of the joint 62 has a plurality of mutually spaced vertical grooves 62e. These grooves form channels for passing the primary-pressure fluid.

The plug 64 comprises a pin made from stainless steel or molded from polyoxymethylene. A disk-like flange 64a is formed near the upper end of the plug 64. An upper extension 64b formed above the flange 64a should have a diameter suitable for insertion into the helical spring 63, and a lower extension 64c, which is located below the flange 64a, tapers downward, converging to the tip. The aforementioned lower extension 64c has a seal ring 64 in the vicinity of the flange 64a.

In the assembled state of the cylindrical connector 6 and the secondary annular extension 47, the spring 63 and plug 64 are held between the upper wall 62a of the joint 62 and the partition 6a of the cylindrical connector 6. As a result, the flange 64a of the plug 64 is urged downward by the helical spring 63, and the seal ring 65 is compressed between the flange 64a and the partition 6a. When the cylindrical connector 6 is not connected to the fluid-supply source, the seal ring 65 is urged by the spring 63 and thus maintains the partition 6a and the flange 64a in tight contact. This prevents leakage of the pressurized fluid contained in the fluid-supply source through the gap between the lower extension 64c of the plug 64 and the inlet opening 21 of the partition 6a.

The above-described connector 6 is attached to the main casing 4.

A specific feature of the present invention is that the inlet opening 21 and the above-described moveable body 7 are aligned with respect to each other in the direction of movement of the moveable body, i.e., in the direction substantially perpendicular to axis Y. In other words, the central axis X3 of the inlet opening 21 and the cylindrical connector 6 are also perpendicular to axis Y, and the moveable body can be positioned at any point on the central axis X3. This means that in a pressure regulator as such, the cylindrical connector 6 or the inlet opening 21 need not be located below the moveable body and, therefore, no connecting parts are needed below the cover 45 of the main casing 4, and the device as a whole can be made narrower in the direction of movement of the moveable body (i.e., vertical direction).

The central axis X3 of the cylindrical connector 6 and the inlet opening 21 are not necessarily coaxial with the central axis X2 of the aforementioned fluid inlet channel 47a, and it is preferable that the central axis X3 of the cylindrical connector 6 and the inlet opening 21 be slightly higher above the central axis X2 of the fluid inlet channel 47a. This will reduce the possibility for the outer extension of the cylindrical connector 6 to be displaced below the cover 45 of the main casing 4.

However, the pressure regulator of the present invention is not limited by the structure in which the outer extension of the cylindrical connector 6 does not go beyond the position of the cover 45 of the main casing 4, i.e., when the size of the regulator is reduced in the direction of movement of the moveable body (i.e., in the direction of axis Y). For example, the principle of the invention will not be violated in a modification where the central axis X3 of the cylindrical connector 6 and of the inlet opening 21 is coaxial with the central axis X2 of the aforementioned fluid inlet channel 47a or where the central axis X3 of the cylindrical connector 6 and of the inlet opening 21 is located below the central axis X2 of the aforementioned fluid inlet channel 47a.

Since the internal parts of the pressure regulator of the present invention are kept in contact with fluid over a long time, they must be made from materials that are resistant to solvents; in particular, they may be coated with a layer of a polyparaxylylene-type resin, especially Parylene N (the trademark of Nippon Parylene Company). It is especially preferable to apply a protective coating made from rubber. Since such a protective coating prevents direct contact of fluid with the surface of the rubber parts, it becomes possible to reduce the cost of the parts of the pressure regulator of the invention by using materials such as NBR, IR, or the like, which are less expensive than conventionally used rubber materials such as EPDM.

In order to improve sliding properties, it is recommended to apply the aforementioned coatings also on the outer surface of the seal ring 48 which is fitted onto the outer surface at the base of the second annular extension 47.

Fig. 5, which is a partial sectional view of the pressure regulator 1, illustrates the pressure regulator 1 of the present invention in a position when it is connected to a pressurized fluid container 200 such as a fuel cartridge of a fuel cell. In Fig. 5, only a part of the pressurized fluid container is shown as a section. The pressurized fluid container 200 comprises a tubular pipe union 201 and a main body 202 attached to the pipe union 201. The pipe union 201 has a vertical through-opening 203. This opening contains a valve body 205 that is urged upward by a spring 204 to prevent ejection of fluid from the pressurized fluid container 200. The valve body is installed in the opening 203.

As shown in Fig. 4, when the pressurized fluid container 200 is attached to the pressure regulator 1, the valve body 205 shifts the plug 64 upward. As a result, the inlet opening 21 of the cylindrical connector 6, which is sealed by the seal ring 65, opens, and the primary-pressure fluid begins to flow sequentially through the inlet opening 21, the grooves 62e in the inner wall of the joint 62, and the filter 61. Since in the initial stage of connection of the pressurized fluid container 200 pressure of the fluid in the secondary pressure-control chamber 42 is low, the diaphragm 8 is urged downward by the pressure-adjusting spring 11. Therefore, the pressure-control valve 12 that seals the through-opening 43a of the main casing 4 moves down from the through-opening 43a in the separation direction. The valve 12 separates from the lower surface of the partition 43 and assumes the open position. As a result, the primary-pressure fluid flows through the aforementioned channels, filter 61, first pressure-control chamber 41, the gap between the opening 43 and the axial extension 103, second pressure-control chamber 42, and nozzle 46, and is discharged through opening 22 to the outside, e.g., to a fuel cell, which is not shown in the drawings.

The following is a more detailed description of the pressure-control mechanism 3.

In a normal state, the diaphragm 8 is adjusted by the pressure-control spring 11 so that in response to the fluid supplied at a pressure, e.g., in the range of 900 KPa to 1 MPa, the diaphragm 8 maintains a predetermined pressure in the secondary-pressure chamber. More specifically, when the primary pressure of the fluid supplied from the pressurized-fluid container 200 exceeds the allowable secondary pressure, the fluid contained in the secondary-pressure chamber 42 overcomes resistance of the pressure-control spring 11 and urges the diaphragm 8 in the upward direction. As a result, the axial extension 103 of the shaft unit 10 will move upward, and the pressure-control valve will close the communication opening 43a of the main casing 4 so that supply of the pressurized fluid into secondary-pressure chamber 42 will be discontinued. On the contrary, if pressure of the fluid in the secondary-pressure chamber 42 drops, the axial extension will be shifted down by the force of the pressure-control spring 11, the communication opening 43a will be opened, and admission of the pressurized fluid to the secondary-pressure chamber 42 will be resumed. Thus, by moving up and down in response to fluctuations of fluid pressure, the diaphragm 8 will maintain the secondary pressure at a constant level.

The detailed description given above relates only to an embodiment of the invention. However, when the pressurized fluid container 200 is connected to the pressure regulator 1 of the invention, a securing device of some kind is needed for securing the container 200 to the regulator 1. Such a device may comprise a resilient clamping mechanism (not shown) capable of holding both parts together by means of a helical spring or a leaf spring. For example, this may be a fixing mechanism disclosed in the Japanese Patent Application 2004-266463 of the same applicant, or any other mechanism the structure of which is beyond the scope of the present patent application.

### [Brief Description of the Drawings]

Fig. 1 is a general three-dimensional view of a pressure regulator made according one embodiment of the invention.
Fig. 2 is a sectional view along line II-II of Fig. 1.
Fig. 3 is an exploded three-dimensional view of a part of the pressure regulator.
Fig. 4 is a three-dimensional sectional view of the pressure regulator.
Fig. 5 is a sectional view illustrating connection of the pressure regulator of Fig. 1 to a pressurized-fluid container.

### [Reference Numerals Used in the Specifications and Drawings]

- 1: Pressure regulator
- 2: Housing
- 21: Fluid inlet opening
- 22: Outlet opening
- 23: Channel
- 3: Pressure-control mechanism
- 4: Main casing
- 40: Pressure-control chamber
- 41: Primary-pressure chamber
- 42: Secondary-pressure chamber
- 43: Partition
- 43a: Communication opening
- 44: First annular projection
- 44a, 44b: Fluid-passing channels
- 45: Cover
- 46: Nozzle
- 47: Second annular projection
- 47a: Inlet fluid flow channel
- 47b: Communication opening
- 47c: Groove
- 47d: Intermediate shoulder
- 48: Inlet flow seal ring
- 5: Cover casing
- 50: Atmospheric pressure chamber
- 6: Cylindrical connector
- 6a: Partition
- 61: Filter
- 62: Joint
- 63: Spring
- 64: Plug
- 65: Seal ring
- 7: Moveable body
- 8: Diaphragm
- 9: Support
- 10: Shaft
- 103: Axial extension
- 103a: Annular groove
- 11: Pressure-control spring
- 12: Pressure-control valve
- G: Gap

## Claims

1. A pressure regulator comprising: a housing having an inlet opening for the supply of pressurized fluid under primary pressure from a pressurized fluid source and an outlet opening for discharging the pressurized fluid under a secondary reduced pressure, and a channel between the aforementioned inlet opening and the outlet opening; and a pressure-regulating mechanism for reducing the aforementioned primary pressure to the aforementioned secondary pressure; the pressure regulator being **characterized by** the fact that the pressure regulating mechanism has a moveable body that comprises a diaphragm which is displaceable in response to pressure fluctuations; the inlet opening and the moveable body being in line with each other in the direction substantially perpendicular to the direction of the diaphragm displacement.

2. The pressure regulator according to Claim 1, wherein the housing comprises:
a main casing the interior of which contains the aforementioned moveable body with the diaphragm, the outer peripheral portion of the diaphragm being sandwiched from the first side [of the housing] and from the second side [of the housing] that is opposite to the first side, and a pressure-control chamber that contains the aforementioned channel on said first side;
a cover casing that is located on said second side and contains an atmospheric-pressure chamber connected with the atmosphere; and
a cylindrical connector that contains the aforementioned inlet opening, is connected to the main casing, and has its central axis oriented substantially perpendicular to the diaphragm displacement direction.

3. The pressure regulator according to Claim 2, wherein:
the aforementioned main pressure-control chamber is provided with a partition that divides this chamber into a primary-pressure chamber connected to the inlet opening and a secondary-pressure chamber that is connected to the outlet opening;
the aforementioned partition being arranged substantially perpendicular to the diaphragm displacement direction and being provided with a communication opening for connecting the primary-pressure chamber with the secondary-pressure chamber; the moveable body consisting of two parts between which the diaphragm is sandwiched, both parts moving together with the diaphragm, one of these parts being located on the main-casing side of the diaphragm and another on the cover-casing side of the diaphragm;
among the aforementioned two parts, one which is located on the main-casing side projecting outside the main casing and being provided with an axial extension through which said communication opening passes;
an annular groove being formed in the periphery on the tip of the axial extension, and a pressure-control valve that opens and closes the aforementioned communication opening being placed into the aforementioned annular groove.
